# EUROPÄISCHE PATENTSCHRIFT

(11) **EP 2 154 018 B1**
(45) Veröffentlichungstag und Bekanntmachung des Hinweises auf die Patenterteilung: **09.01.2013**
(21) Anmeldenummer: 09010479.5
(22) Anmeldetag: 14.08.2009
(51) Int. Cl.: B60N 2/58

(54) **Fahrzeugsitz**
Vehicle seat
Siège de véhicule

(30) Priorität: 15.08.2008 DE 102008038266; 12.12.2008 DE 102008061973
(43) Veröffentlichungstag der Anmeldung: 17.02.2010
(73) Patentinhaber: Scherdel Marienberg GmbH, 09496 Marienberg (DE)
(72) Erfinder: Pahner, Klaus, 09435 Scharfenstein (DE); Pöge, Heinz, 09128 Chemnitz (DE); Seitenglanz, Jan, 09496 Marienberg (DE)
(74) Vertreter: Findeisen, Andreas

(56) Entgegenhaltungen:
- EP-A- 0 372 338
- WO-A-94/19209
- WO-A-99/58363
- WO-A-2005/100086
- DE-A1-102005 052 345
- DE-U1-202007 000 484
- FR-A- 2 861 660
- GB-A- 2 387 537
- US-A- 5 040 848

## Beschreibung

Die Erfindung betrifft einen Fahrzeugsitz mit einem Polsterträger für ein Sitzkissen und mit einer Submarining-Rampe, die als ein an dem in Fahrtrichtung vorderen Abschnitt in Sitzquerrichtung verlaufender, nach oben über die dahinter liegenden Bereiche der Auflagefläche für das Sitzkissen überstehender und aus einem Hartschaumelement gefertigter Konturabschnitt ausgestaltet ist.

Fahrzeugsitze müssen neben verschiedenartigen Komfortaspekten primär eine hohe Sicherheit gewährleisten, um die Insassen in jeder Fahrsituation, insbesondere jedoch bei intensiven Beschleunigungs- und Bremsvorgängen stabil im Sitz zu halten. Dabei müssen die jeweiligen Konstruktionen auch unter Beachtung der bei einem Fahrzeugcrash auftretenden Kräfte konzipiert werden. Hierfür werden die inzwischen standardmäßig eingesetzten Sicherheitsgurte zunehmend mit spezifischen Ausformungen am Sitzkörper kombiniert, mit denen im Crashfall ein Durchrutschen von Fahrzeuginsassen unter dem angelegten Sicherheitsgurt vermieden werden soll. Dieses Durchrutschen wird allgemein als "submarining" bezeichnet.

In DE 199 43 595 A 1 wird ein Fahrzeugsitz beschrieben, bei dem im unteren Bereich eines Sitzgestells mit aufliegendem Sitzkissen Bauteile zur Vermeidung von Submarining angeordnet sind. Dabei wird im Crashfall durch ein schlagartiges Anheben des vorderen Abschnittes vom Sitzkissen rechtwinklig zur Längsausrichtung des Kraftfahrzeugs eine Rampe ausgeformt, die eine Verlagerung der Hüfte oder des Beckens der auf dem Sitz befindlichen Person nach vorn verhindern soll. Somit kann im Crashfall das Durchrutschen von Fahrzeuginsassen unter dem Sicherheitsgurt vermieden werden. Allerdings erfordert eine derartige temporär auszuformende Submarining-Rampe einen erheblichen Aufwand an mechanischen und elektronischen Bauteilen.

Aus DE 195 41 999 A1 ist ein Fahrzeugsitz bekannt, bei dem anstelle einer temporär auszuformenden Rampe eine entsprechende Kontur dauerhaft in die Sitzkontur integriert wird. Hierbei weist das in einem Polsterträger abgestützte Sitzkissen in seiner vorderen Hälfte eine zur Sitzrichtung quer verlaufende und nach oben über die benachbarten Bereiche der Auflagefläche überstehende Rampe auf. Der Polsterträger ist als Schale ausgebildet, wobei die Rampe durch entsprechende Konturen im Trägerboden der Schale ausgeformt wird. Durch die konkrete Kontur der Polsterträgerschale kann eine spezifisch ausgeformte Sitzkontur für jeweils unterschiedliche Anforderungen geschaffen werden. Nachteilig sind jedoch die hohen Werkzeugkosten zur Herstellung der Schale. Außerdem kann bedingt durch die Werkstoffeigenschaften nur ein begrenzter Höhenversatz zwischen zwei benachbarten Abschnitten einer Schalenkontur realisiert werden, so dass auch die Vielfalt der erreichbaren Konturen eingeschränkt ist.

In DE 10 2005 020 335 A1 wird ein Fahrzeugsitz beschrieben, dessen Polsterteil aus einem unteren Hartschaumteil mit einer oberen Weichschaumauflage besteht. Das aus expandiertem Polypropylen-Partikelschaum (EPP) bestehende Hartschaumteil weist an seiner Oberseite eine Rampe auf, mit der ein Submarining verhindert werden soll. Gleichzeitig hat die Unterseite des Hartschaumteils eine zum Fahrzeugboden kongruente Kontur, so dass eine formschlüssige Abstützung der gesamten EPP-Baugruppe auf dem Fahrzeugboden erreicht wird. Dies erfordert jedoch eine für jeden Fahrzeugtyp spezifisch angepasste Kontur des Hartschaumteils, so dass Modifizierungen für unterschiedliche Karosserieböden nur mit erheblichem Aufwand möglich sind.

Dieser Aufwand lässt sich wesentlich reduzieren, sofern separate Sitzgestelle verwendet werden, denen jeweils Hartschaumkörper aus EPP zur Ausformung einer Submarining-Rampe zugeordnet werden. Problematisch ist hierbei jedoch, dass die Hartschaumkörper eine ausreichende Stabilität aufweisen müssen, um die Fahrzeuginsassen bei extremen Bremskräften stabil im Sitz zu halten. Dies kann grundsätzlich durch zusätzliche Einlagen im Hartschaum oder zusätzliche Stützkonstruktionen realisiert werden, wie beispielsweise aus DE 20 2007 015 482 U1 bekannt. Allerdings erfordert diese technische Lösung einen zeit- und kostenaufwendigen Herstellungsprozess. Weiterhin ist ein späteres Recycling aufwändig, weil die Stützeinlagen vom Hartschaumkörper getrennt werden müssen.

Zumindest das spätere Recycling kann vereinfacht werden durch die Ausgestaltung eines Sitzes gemäß EP 0 372 338 A2, indem das Sitzunterteil in einen schalenförmigen Träger für das Polster und in einen Sitzrahmen mit Stahltraversen unterteilt wird, die primär die Stabilität des gesamten Fahrzeugsitzes gewährleisten sollen.

Schließlich wird in FR 2 861 660 A1 ein Fahrzeugsitz beschrieben, bei dem der Polsterträger modulartig aus Blechprofilelementen zusammengefügt ist und wobei diese Profile abschnittsweise eine Kontur zur Ausbildung einer Submarining-Rampe aufweisen.

Aufgabe der Erfindung ist es, einen Fahrzeugsitz mit einem Polsterträger für ein Sitzkissen und mit einer Submarining-Rampe zu schaffen, der als günstige Alternative zu einem aus Metallblech gefertigten Fahrzeugsitz einen einfachen Aufbau aufweist, kostengünstig hergestellt und mit geringem Aufwand für unterschiedliche Fahrzeuge modifiziert werden kann.

Die Aufgabe wird mit den technischen Merkmalen gemäß Patentanspruch 1 gelöst. Vorteilhafte Ausgestaltungen sind Gegenstand von abhängigen Ansprüchen, deren Merkmale in einem Ausführungsbeispiel näher beschrieben werden.

Der Fahrzeugsitz kann durch den modulartigen Aufbau aus Profilelementen einfach und kostengünstig hergestellt werden. Weiterhin ermöglicht die segmentartige Ausgestaltung des Hartschaumelementes zahlreiche Varianten für die Sitzgestaltung. Folglich ist eine Modifizierung für den Einbau in unterschiedliche Fahrzeuge mit geringem Aufwand möglich.

Die im Hartschaumelement ausgestaltete Rampe gewährleistet unabhängig von der jeweils konkreten Sitzgestaltung einen wirksamen Schutz der Fahrzeuginsassen vor Submarining. Gleichzeitig kann mit dem Hartschaumelement auch eine wirksame seitliche Abstützung der Insassen erzielt werden. Demzufolge gewährleistet dieser Fahrzeugsitz eine hohe Sicherheit, indem die Insassen in jeder Fahrsituation, insbesondere jedoch bei intensiven Beschleunigungs- und Bremsvorgängen stabil im Sitz gehalten werden.

Ausführungsbeispiele der Erfindung sind in der Zeichnung dargestellt und werden nachfolgend beschrieben. Es zeigen:
- Fig. 1: einen erfindungsgemäßen Fahrzeugsitz in einer ersten Ausführung in perspektivischer Ansicht
- Fig. 2: den Fahrzeugsitz gemäß Fig. 1 mit "aufgebrochener" Trägerstruktur
- Fig. 3: ein Detail des Fahrzeugsitzes gemäß Fig. 1 in Seitenansicht im Schnitt
- Fig. 4: das Detail "A" aus Fig. 3 in vergrößerter Darstellung

In der Zeichnung sind lediglich die für die vorliegende Erfindung wesentlichen Bauteile eines Fahrzeugsitzes dargestellt. Demzufolge besteht der Fahrzeugsitz aus einem Polsterträger mit einem Grundkörper, der modulartig aus mehreren Profilelementen zusammengefügt ist. Diese Profilelemente können kraftschlüssig und/oder formschlüssig zu einem Grundkörper zusammengefügt werden. Hierfür sind zahlreiche Fügeverfahren geeignet, zum Beispiel Schweiß-, Klebe-, Schraub- oder Klemmverbindungen, die auch miteinander kombiniert eingesetzt werden können. Auch bezüglich der Struktur der Profilelemente sind verschiedenartige Varianten möglich, wobei insbesondere Winkelprofile, U-Profile und Rohrprofile vorteilhaft zu handhaben sind.

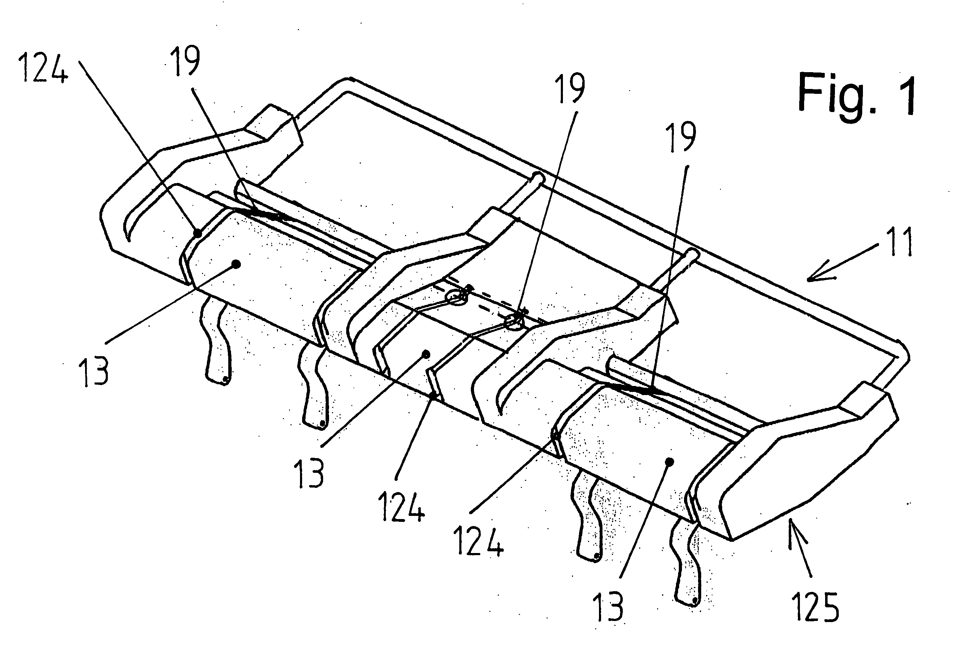

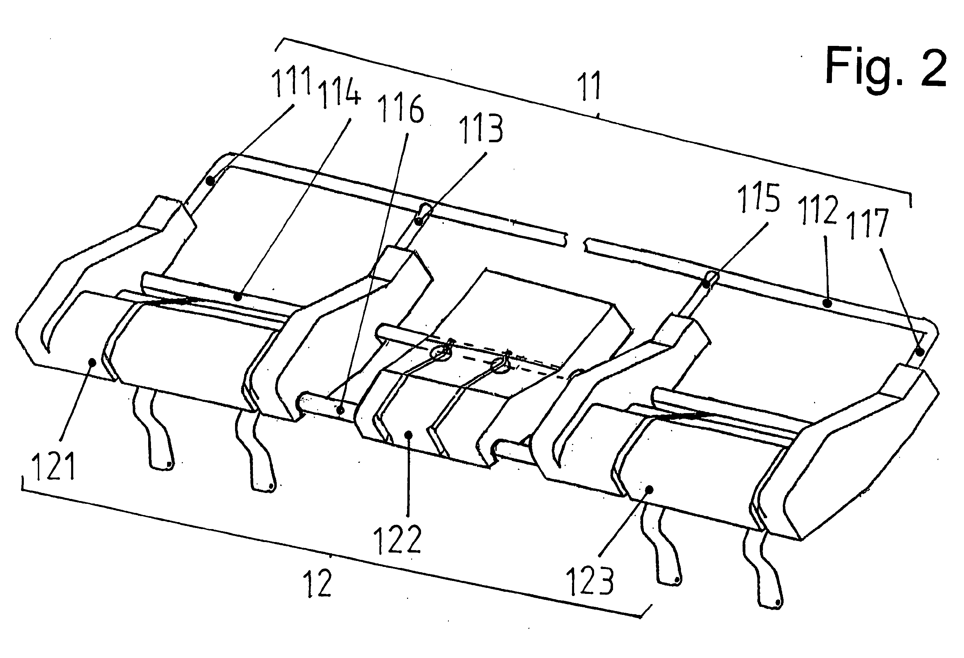

Fig. 1 und Fig. 2 zeigen einen Grundkörper 11 mit mehreren Profilelementen 111 bis 117. Hierbei verlaufen die Profilelemente 111, 113, 115 und 117 in der Einbaulage in Fahrtrichtung des zugeordneten Fahrzeuges und die Profilelemente 112, 114 und 116 rechtwinklig zur Fahrtrichtung des zugeordneten Fahrzeuges.

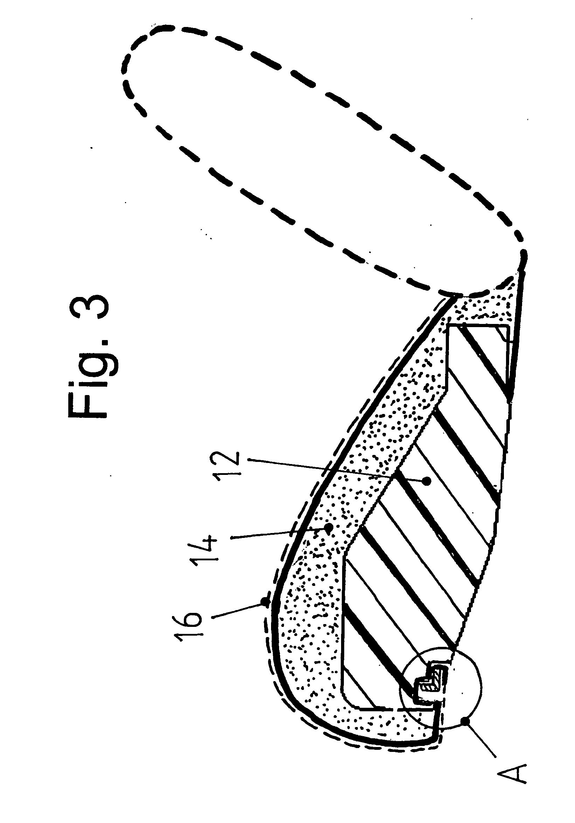

Auf dem aus den Profilelementen 111 bis 117 zusammengefügten Grundkörper 11 kann ein Hartschaumelement 12 abgestützt werden, das bevorzugt aus expandiertem Polypropylen-Partikelschaum (EPP) besteht. Dieses Hartschaumelement 12 weist eine Submarining-Rampe 13 auf, die an dem in Fahrtrichtung vorderen Abschnitt in Sitzquerrichtung und als ein nach oben über die dahinter liegenden Bereiche der Auflagefläche für ein Sitzkissen 14 (Fig. 3) überstehender Konturabschnitt ausgestaltet ist.

Die Abstützung des Hartschaumelementes 12 ist an sich auf dem gesamten Konturverlauf der Profilelemente 111 bis 117 des Grundkörpers 11 möglich. Allerdings ist eine derartige Ausgestaltung unter Aspekten des Federungskomforts fragwürdig, so dass die Abstützung vorzugsweise nur auf einigen Abschnitten des Grundkörpers 11 erfolgt.

Unabhängig von der konkreten Anzahl und Ausgestaltung der hier sieben Profilelemente 111 bis 117 sind auf der zur Submarining-Rampe 13 entgegengesetzt angeordneten Grundfläche des Hartschaumelementes 12 Kanalstrukturen 125 ausgeformt. Die Kontur dieser Kanalstrukturen 125 ist kongruent zur Kontur der zugeordneten Abschnitte der Profilelemente 111 bis 117 des Grundkörpers 11. Somit wird bei der Montage bereits eine formschlüssige Lagefixierung erreicht.

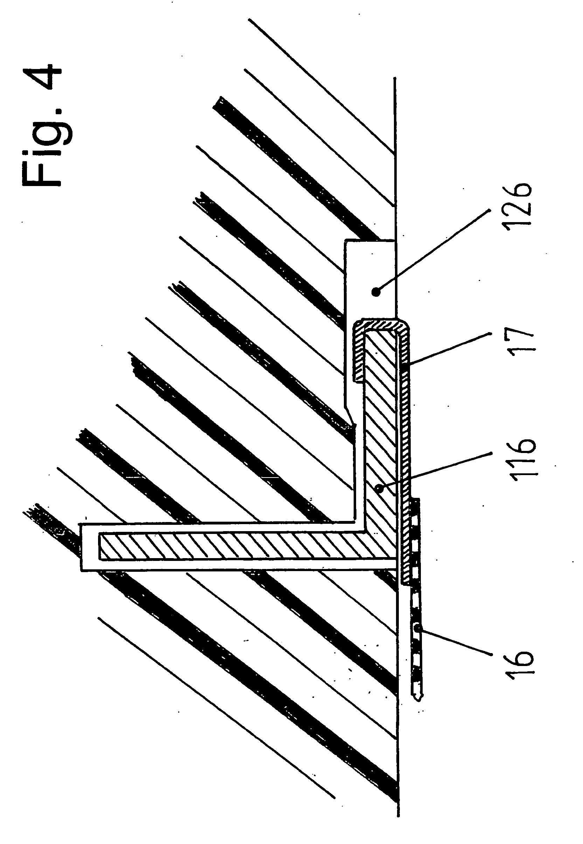

Fig. 3 und Fig. 4 zeigen eine vorteilhafte Ausgestaltung, indem an zumindest einigen der Profilelemente 111 bis 117 des Grundkörpers 11 der Bezugsstoff 16 für den Fahrzeugsitz befestigt wird. Hierbei ist ein winkelförmiges Profilelement 116 vorgesehen, an dem der Bezugsstoff 16 über hakenförmige Elemente 17 arretiert wird. Die Kontur des hakenförmigen Elementes 17 ist kongruent zur Kontur des zugeordneten Profilelementes 116. Für eine einfache Montage ist es zweckmäßig, dass am Hartschaumelement 12 im Bereich der Befestigung für den Bezugsstoff 16 eine Ausnehmung 126 ausgestaltet ist, deren Kontur dem Bauraum von Profilelement 116 und hakenförmigem Element 17 entspricht.

Als Alternative zu einer derartigen Befestigung an den Profilelementen 111 bis 117 kann der Bezugsstoff 16 für den Fahrzeugsitz auch am Hartschaumelement 12 befestigt werden. Hierbei wird der Bezugsstoff 16 über zugeordnete Befestigungselemente direkt im Volumen des Hartschaumelementes 12 befestigt, wobei eine diesbezügliche Ausführung in der Zeichnung allerdings nicht näher dargestellt ist.

An mindestens einem der Profilelemente 111 bis 117 des Grundkörpers 11 ist eine Halterung 19 für das Hartschaumelement 12 abgestützt.

Das Hartschaumelement 12 weist mehrere separate Segmente auf, die jeweils die Sitzkontur für einen Fahrzeuginsassen ausbilden. Auf dem derart ausgestatteten Hartschaumelement 12 werden die eigentlichen Sitzkissen 14 befestigt.

Gemäß Fig. 1 und Fig. 2 umfasst das Hartschaumelement 12 drei Segmente 121, 122 und 123, die für den Rücksitz eines PKW mit drei Sitzplätzen geeignet sind. Hierbei sind die Segmente der benachbarten Sitzabschnitte 121 und 122 bzw. 122 und 123 mit einer jeweils unterschiedlichen Kontur ausgestaltet. Die beiden äußeren Segmente 121 und 123 weisen jeweils eine U-förmige Kontur auf, die ausgehend von einem über die gesamte Sitzfläche verlaufenden kompakten Abschnitt im Bereich der Ausbildung der Submarining-Rampe 13 in zwei seitliche schmale und in Fahrtrichtung längere Abschnitte übergeht. Das mittlere Segment 122 geht ausgehend von einem ebenfalls über die gesamte Sitzfläche verlaufenden kompakten Abschnitt im Bereich der Ausbildung der Submarining-Rampe 13 in einen Abschnitt über, der annähernd so lang ist wie die seitlichen schmalen Abschnitte der beiden äußeren Segmente 121 und 123.

Die Segmente 121, 122 und 123 sind jeweils mit separaten Spannelementen 19 an mindestens einem Profilelement 111 bis 117 des Grundkörpers 11 abgestützt. Somit wird zusätzlich zur formschlüssigen Lagefixierung durch die Kanalstrukturen 125 eine kraftschlüssige Verbindung des aus den Segmenten 121, 122 und 123 bestehenden Hartschaumelementes 12 mit dem Grundkörper 11 realisiert. Die Spannelemente 19 können verschiedenartig ausgestaltet und am Grundkörper 11 befestigt werden, beispielsweise mit einer Nietverbindung. Ebenso können die Spannelemente 19 bandförmig ausgestaltet werden mit Konturen an beiden Endabschnitten, die jeweils kongruent sind zur Kontur der zugeordneten Profilelemente 111 bis 117. Hierbei sieht eine besonders vorteilhafte Variante vor, dass die an den Endabschnitten ausgeformten Konturen gegensinnig zueinander ausgestaltet sind. Somit wird eine einfach zu handhabende und dennoch stabile Lagerung des Hartschaumelementes 12 durch eine Schnappverbindung am Grundkörper 11 erzielt.

Eine weitere vorteilhafte Ausgestaltung sieht vor, dass an der Oberseite der Segmente 121, 122 und 123 des Hartschaumelementes 12 jeweils Kanalstrukturen 124 ausgeformt sind, deren Kontur kongruent ist zur Kontur der zugeordneten Spannelemente 19. Somit wird eine exakt definierte Montagelage zwischen den Segmenten 121, 122 und 123 und den Spannelementen 19 gewährleistet.

Der beschriebene Fahrzeugsitz, der primär für eine Anwendung an Rücksitzbänken in PKW geeignet ist, kann verschiedenartig weiter ausgestaltet werden. So können beispielsweise in den nicht von den Segmenten 121 bis 123 überdeckten Abschnitten des Grundkörpers 11 innerhalb der Profilelemente 111 bis 117 eine Drahtrahmenmatte oder auch mehrere Einzelfederelemente angeordnet werden, wodurch der Federungskomfort des gesamten Fahrzeugsitzes weiter erhöht und der Höhenaufbau des Sitzes reduziert werden kann. Dies ist besonders vorteilhaft bei klappbaren oder versenkbaren Sitzen, bei denen die Lehne zur Vergrößerung des Laderaumes auf den Sitz zu liegen kommt.

### Bezugszeichenliste

- 11: Grundkörper des Polsterträgers
- 111: Profilelement in Fahrtrichtung
- 112: Profilelement quer zur Fahrtrichtung
- 113: Profilelement in Fahrtrichtung
- 114: Profilelement quer zur Fahrtrichtung
- 115: Profilelement in Fahrtrichtung
- 116: Profilelement quer zur Fahrtrichtung
- 117: Profilelement in Fahrtrichtung

- 12: Hartschaumelement
- 121: Segment des Hartschaumelementes
- 122: Segment des Hartschaumelementes
- 123: Segment des Hartschaumelementes
- 124: Kanalstruktur am Hartschaumelement (Oberseite)
- 125: Kanalstruktur am Hartschaumelement (Grundfläche)
- 126: Ausnehmung am Hartschaumelement

- 13: Submarining-Rampe am Hartschaumelement
- 14: Sitzkissen
- 16: Bezugsstoff für Sitz
- 17: hakenförmiges Element für Befestigung Bezugsstoff
- 19: Halterung / Spannelement für Hartschaumelement

## Patentansprüche

1. Fahrzeugsitz mit einem Polsterträger für ein Sitzkissen und mit einer Submarining-Rampe (13), die als ein an dem in Fahrtrichtung vorderen Abschnitt in Sitzquerrichtung verlaufender, nach oben über die dahinter liegenden Bereiche der Auflagefläche für das Sitzkissen überstehender und aus einem Hartschaumelement (12) gefertigter Konturabschnitt ausgestaltet ist, wobei der Polsterträger einen modulartig aus Profilelementen zusammengefügten Grundkörper (11) aufweist, auf dem zumindest abschnittsweise das Hartschaumelement (12) abstützbar ist, wobei am Hartschaumelement (12) auf der zur Kontur der Submarining-Rampe (13) entgegengesetzt angeordneten Grundfläche Kanalstrukturen ausgeformt sind, deren Kontur kongruent ist zur Kontur der zugeordneten Abschnitte der Profilelemente des Grundkörpers (11), wobei an mindestens einem der Profilelemente des Grundkörpers (11) eine Halterung für das Hartschaumelement (12) abgestützt ist, wobei das Hartschaumelement (12) mehrere separate Segmente (121, 122, 123) aufweist, die jeweils die Sitzkontur für einen Fahrzeuginsassen ausbilden, wobei die Segmente (121, 122, 123) benachbarter Sitzabschnitte mit jeweils unterschiedlicher Kontur ausgestaltet sind, wobei drei Sitzabschnitte (121, 122, 123) nebeneinander ausgestaltet sind, von denen die beiden äußeren Segmente (121, 123) jeweils eine U-förmige Kontur aufweisen, die ausgehend von einem über die gesamte Sitzfläche verlaufenden kompakten Abschnitt im Bereich der Ausbildung der Submarining-Rampe (13) in zwei seitliche schmale und in Fahrtrichtung längere Abschnitte übergeht und wobei das mittlere Segment (122) ausgehend von einem ebenfalls über die gesamte Sitzfläche verlaufenden kompakten Abschnitt im Bereich der Ausbildung der Submarining-Rampe (13) in einen Abschnitt übergeht, der bezogen auf die Fahrtrichtung annähernd so lang ist wie die seitlichen schmalen Abschnitte der beiden äußeren Segmente (121, 123).

2. Fahrzeugsitz nach Anspruch 1, **dadurch gekennzeichnet,**
**dass** das gesamte Hartschaumelement oder dessen separate Segmente (121, 122, 123) jeweils mit Spannelementen (19) an mindestens einem Profilelement (111 - 117) des Grundkörpers (11) abgestützt sind.

3. Fahrzeugsitz nach Anspruch 2, **dadurch gekennzeichnet,**
**dass** die Spannelemente (19) bandförmig ausgestaltet sind, wobei an beiden Endabschnitten jeweils Konturen ausgeformt sind, die kongruent sind zur Kontur der zugeordneten Profilelemente (111 - 117) des Grundkörpers (11).

4. Fahrzeugsitz nach Anspruch 3, **dadurch gekennzeichnet,**
**dass** die an den Endabschnitten der Spannelemente (19) ausgeformten Konturen gegensinnig zueinander ausgestaltet sind.

5. Fahrzeugsitz nach Anspruch 2, **dadurch gekennzeichnet,**
**dass** an der Oberseite des Hartschaumelementes bzw. an der Oberseite der Segmente (121, 122, 123) des Hartschaumelementes jeweils Kanalstrukturen (124) ausgeformt sind, deren Kontur kongruent ist zur Kontur der zugeordneten Spannelemente (19).

## Claims

1. A vehicle seat with an upholstery carrier for a seat cushion and an anti-submarining ramp (13) that is designed as a contour section made of a rigid foam element (12) stretching transversely across the front section of the seat in the direction of travel and protruding upwards beyond the supports for the seat cushion behind it, wherein said upholstery carrier comprises a base body (11) assembled from modular profile elements on which at least sections of said rigid foam element (12) can rest, wherein canal structures are formed on the base surface opposite to the contour of the anti-submarining ramp (13) on said rigid foam element (12) the contour of which is congruent with the contour of the associated sections of the profile elements of the base body (11), wherein a holder for said rigid foam element (12) is supported by at least one of the profile elements of the base body (11), wherein said rigid foam element (12) comprises multiple separate segments (121, 122, 123) that each define the seat contour for one passenger, wherein the segments (121, 122, 123) of adjacent seat sections each have a different contour design, wherein three seat sections (121, 122, 123) are arranged next to one another, the two outer segments (121, 123) of which comprising a U-shaped contour that verges from a compact section that stretches across the entire seat surface in the region where the anti-submarining ramp (13) is formed into two lateral narrow sections that are longer in the direction of travel, and wherein the center segment (122) verges from a compact section that also stretches across the entire seat surface in the region where the anti-submarining ramp (13) is formed into a section that, with respect to the direction of travel, is approximately as long as said lateral narrow sections of the two outer segments (121, 123).

2. The vehicle seat according to claim 1, **characterized**
**in that** either the entire rigid foam element or its separate segments (121, 122, 123) are each supported on at least one profile element (111 - 117) of the base body (11) by means of tensioning elements (19).

3. The vehicle seat according to claim 2, **characterized**
**in that** the tensioning elements (19) have a ribbon-shaped design, wherein contours are formed at the two end sections that are congruent with the contour of the associated profile elements (111 - 117) of the base body (11).

4. The vehicle seat according to claim 3, **characterized**
**in that** the contours formed at the end sections of the tensioning elements (19) are designed as opposing parts.

5. The vehicle seat according to claim 2, **characterized**
**in that** canal structures (124) are molded into the upper side of the rigid foam element or into the upper side of segments (121, 122, 123) of the rigid foam element, respectively, the contour of which is congruent with the contour of the associated tensioning elements (19).

## Revendications

1. Siège de véhicule avec une armature pour un coussin de siège et avec une rampe anti sous-marinage (13) conçue en tant que segment de bord et fabriqué d'un élément de mousse rigide (12) qui est disposée, en sens de marche et en sens transversal par rapport aux sièges du véhicule, au niveau du segment avant, et qui vers le haut déborde des zones de la surface d'appui pour le coussin situées derrière lui, où l'armature du coussin est composée d'un corps de base (11) constitué d'éléments profilés modulaires sur lequel l'élément de mousse rigide (12) peut être appuyé au moins par section, où la surface de base de cet élément de mousse rigide (12) qui, elle, est disposée en sens opposé du bord de la rampe anti sous-marinage (13), est dotée de canaux dont le bord est congruent avec le bord des sections affectées aux éléments profilés du corps de base (11), où au moins sur l'un des éléments profilés du corps de base (11) est appuyé un support pour l'élément de mousse rigide (12), où cet élément de mousse rigide (12) comprend plusieurs segments séparés (121, 122, 123) dont chacun forme le bord du siège de l'un des occupants du véhicule, où les segments (121, 122, 123) des sièges voisins présentent des bords différents, où trois segments du siège (121, 122, 123) sont disposés côte à côte, les deux segments extérieurs (121, 123) de ceux-ci ayant des bords en forme U qui, en partant d'un segment compact situé au niveau de la rampe anti sous-marinage (13) qui s'étend sur toute la longueur de la surface du siège, passent à constituer deux sections latérales minces qui, en sens de marche, gagnent en longueur, et où le segment moyen (122) passe, en partant également d'un segment compact situé au niveau de la rampe anti sous-marinage (13) qui s'étend sur toute la longueur de la surface du siège, à constituer un segment qui, par rapport au sens de marche du véhicule, est presque aussi long que les deux sections latérales minces des deux segments extérieurs (121, 123).

2. Siège de véhicule suivant la revendication 1, **caractérisé en ce**
**que** l'élément de mousse rigide entier ou ses segments séparés (121, 122, 123) sont appuyés, au moins sur l'un des éléments profilés (111 - 117) du corps de base (11), par des éléments de serrage (19).

3. Siège de véhicule suivant la revendication 2, **caractérisé en ce**
**que** les éléments de serrage (19) sont conçus en forme de bande dont les sections finales présentent des bords qui sont congruents avec le bord des éléments profilés y affectés (111 - 117) du corps de base (11).

4. Siège de véhicule suivant la revendication 3, **caractérisé en ce**
**que** les bords situés au niveau des sections finales des éléments de serrage (19) sont disposés en sens opposé.

5. Siège de véhicule suivant la revendication 2, **caractérisé en ce**
**que** le côté supérieur de l'élément de mousse rigide ou le côté supérieur des segments (121, 122, 123) de l'élément de mousse rigide est doté de canaux (124) dont le bord est congruent avec le bord des éléments de serrage y affectés (19).
